# EUROPEAN PATENT APPLICATION

(11) **EP 1 104 141 A2**
(43) Date of publication of application: **30.05.2001**
(21) Application number: 00310279.5
(22) Date of filing: 20.11.2000
(51) Int. Cl.: H04L 29/06, H04L 12/56

(54) **System for generating composite packets**

(30) Priority: 29.11.1999 US 450851
(71) Applicant: LUCENT TECHNOLOGIES INC., Murray Hill, New Jersey 07974-0636 (US)
(72) Inventor: Runyon, James Philip, Wheaton, Illinois 60187 (US); Su, Shang-Fon, Naperville, Illinois 60540 (US); Yang, Margaret H., Naperville, Illinois 60565 (US)
(74) Representative: Watts, Christopher Malcolm Kelway, Dr.

(57) **Abstract**

This invention relates to Internet Protocol (IP) networks and to a system that generates composite packets for transmission over the IP network, where an aggregation of packets from multiple sources of higher layer protocols forms a single packet of the underlying protocol in order to maximize the data transfer efficiency across the IP network. When user data traverses the protocol stack in preparation to be sent across the IP network, multiple protocol headers are added to the data. Network performance is optimized when the resulting packet almost completely fills the Maximum Transfer Unit (MTU) along the data transfer path, reducing header overhead. The system for generating composite packets eliminates the tradeoff between network efficiency and quality of service. The use of composite packets reduces the overhead associated with sending packets that carry only a single higher layer payload. It also enables individual applications to utilize small packets at their own protocol layers with minimal penalty in latency, thereby freeing application developers from the need to maintain larger packet sizes. Implementation of this optimization can be carried out at a variety of protocol layers, and aggregating packets at a particular protocol layer does not affect the operation of any other layer. The higher layer packets aggregated into the composite packet must have the same destination.

## Description

### Field Of The Invention

This invention relates to Internet Protocol (IP) networks and, in particular, to a system which generates composite packets of data traffic for transmission over the IP network, where an aggregation of packets from multiple sources of higher layer protocols forms a single packet of the underlying protocol in order to maximize the data transfer efficiency across the IP network.

### Problem

When user data traverses the protocol stack in preparation to be sent across the IP network, multiple protocol headers (e.g., RTP, UDP, IP) are added to the data. Network performance is optimized when the resulting packet almost completely fills the Maximum Transfer Unit (MTU) along the data transfer path, reducing header overhead. However, this confronts designers of real-time applications, such as voice-over-IP, with a dilemma: waiting for data size close to MTU results in significant latency and thus poor quality of service, yet sending a small packet results in a comparatively inefficient use of bandwidth.

### Solution

The above described problems are solved and a technical advance achieved in the field by the system for generating composite packets which functions to carry a variety of application traffic on a data communication network, such as an IP network. This is accomplished by the use of a composite packet structure for all types of traffic that is transmitted over the IP network. The system for generating composite packets processes and converts data from multiple applications into transport protocol packets, and then aggregates into a single packet of the underlying protocol in order to maximize the data transfer efficiency across the IP network. In this manner, applications can utilize many small packets with minimal impact on the network performance, thereby freeing application developers from the need to maintain larger packet sizes.

Implementation of this optimization is simple and can be carried out at a variety of protocol layers, and aggregating packets at a particular layer does not affect the operation of any other layer of the protocol. The higher layer protocol packets aggregated into a composite packet must have the same destination address to simplify routing of the resultant packet. Once a composite packet is sent, only the destination host needs to interpret the aggregation, as the intermediate routers pass on the IP packet normally, unaware of its content. This system results in the following benefits:
1. Faster response time for real time applications.
2. Reduced network resource utilization.
3. Real time application developers need not be concerned with packet size with regard to data transfer efficiency.
4. Reduction in processing time by intermediate routers, since fewer packets need to be processed.
5. Greater resiliency to data loss, since the loss of a packet containing a small amount of data from multiple sources is less disruptive than the loss of a packet containing data from a single source.

The system for generating composite packets implements the composite packet capability by the use of an enhancement in a selected layer of the underlying protocol, such as the IP protocol layer which enables the network to carry multiple UDP/TCP packets in a single IP packet. The existing IP header format is used and a new IP protocol option is added to this header by using the IP Options field in the IP header to indicate that multiple UDP and/or TCP packets are carried in the IP packet. The new IP option is interpreted only by the destination host and the intermediate routers do not process the option, therefore rendering the composite nature of the packet transparent to the IP network routers.

### Brief Description Of The Drawings

Figure 1 illustrates in block diagram form the overall architecture of the system for generating composite packets and a typical system environment in which this is implemented;
Figure 2 illustrates the implementation of an IP header with the IP Options field indicating the multiple UDP option for a packet used in the system for generating composite packets;
Figure 3 illustrates the implementation of an IP packet used in the system for generating composite packets that carries multiple UDPs;
Figure 4 illustrates the implementation of the IP Options field in the IP header used in the system for generating composite packets that carries multiple TCPs;
Figure 5 illustrates the implementation of the IP Options field in the IP header used in the system for generating composite packets that carries multiple UDPs and TCPs; and
Figure 6 illustrates in flow diagram form the operation of the system for generating composite packets.

### Detailed Description

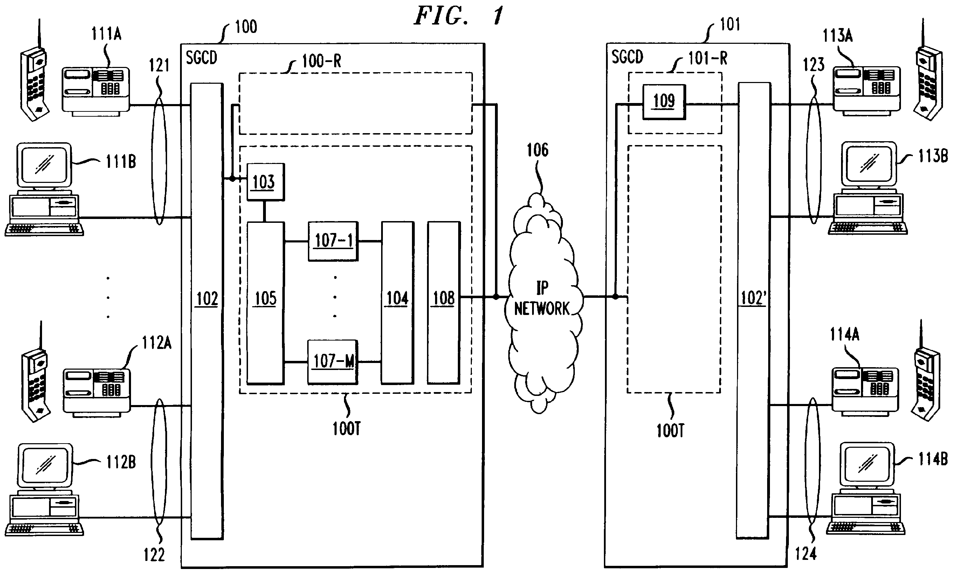

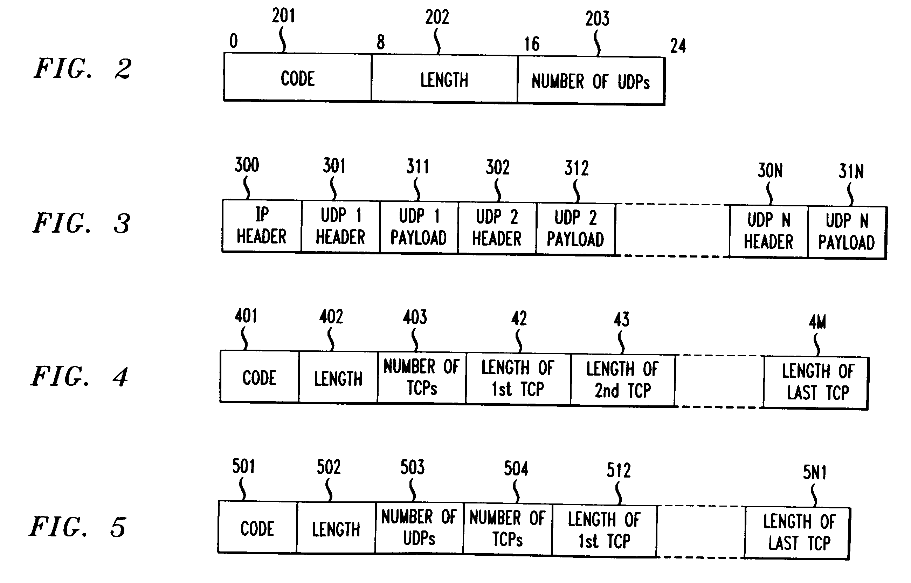

Figure 1 illustrates in block diagram form the overall architecture of the system for generating composite packets 100 and a typical system environment in which this system is implemented. At least one, and optionally a plurality of customer equipment 111-114 are connected to an IP network 106 by means of associated communication media 121-124. The IP network 106 provides the overall end-to-end routing and delivery of the traffic generated by the customer equipment 111-114 to thereby interconnect subscribers at the customer equipment 111-114 with desired destinations. The data communications originating from the customer equipment 111-114 include not only the traditional voice-only telecommunication services but also IP network-based multi-media services. These multi-media services can entail any combination of media. It is therefore advantageous to integrate all communications into a single transmission medium. However, telecommunications networks are traditionally implemented using a real time, circuit switched transmission medium which when migrating to data communications networks generate a large quantities of small packets. As noted above, it is very inefficient to transmit large quantity of small packets over IP networks. Thus, the system for generating composite packets 100 serves as a packet originating host to process and combine data transmissions from the customer equipment 111-112 into a composite packet for transmission via the IP network 106 to a destination host comprising the destination system for generating composite packets 101 that serves to process the transport protocol packets contained in the incoming packet received from the IP network 106 and distribute to the designated destination customer equipment 113-114. Each of the system for generating composite packets 100 and the destination system for generating composite packets 101 include transmitter 100T, 101T and receiver 100R, 101 R apparatus to enable the bidirectional transmission of data over the IP network 106. For simplicity of description, the example used herein describes the transmitter 100T apparatus and receiver 101 R apparatus in detail. It is understood that the correspondint transmitter 101 T apparatus and receiver 100R apparatus operates in the same manner as the apparatus described.

### IP Networks

In the IP network, several networks are connected together through the use of gateways and an internetworking protocol. The gateways are termed "routers" and use the internetworking protocol to hide the underlying details of the actual networks that carry the data transmissions in order to provide uniform service across diverse networks. The leading inter-networking protocol is referred to as TCP/IP and comprises two core protocols: Transmission Control Protocol (TCP) which is a connection oriented transport service, and Internet Protocol (IP) which comprises a connectionless mode network service. Another internetworking protocol is referred to as User Datagram Protocol (UDP). The IP is termed a connectionless mode network protocol since it is datagram oriented. When an entity connected to the network wishes to transmit data to a designated destination using the IP, it transmits the data as a series of packets. Associated with each packet is an IP header. This IP header consists of, among other things, a Source IP address, a Destination IP address and a protocol identifier, indicating which transport protocol was used to create the message being carried in the packet. The IP protocol module takes the transport protocol packet and encapsulates it into an IP packet, which contains all of the data necessary to deliver the packet to the designated destination. The destination host, upon receiving the packet, strips off the IP header and passes the transport protocol packet to the higher level protocol identified in the IP header.

### System for Generating Composite Packets (SGCP)

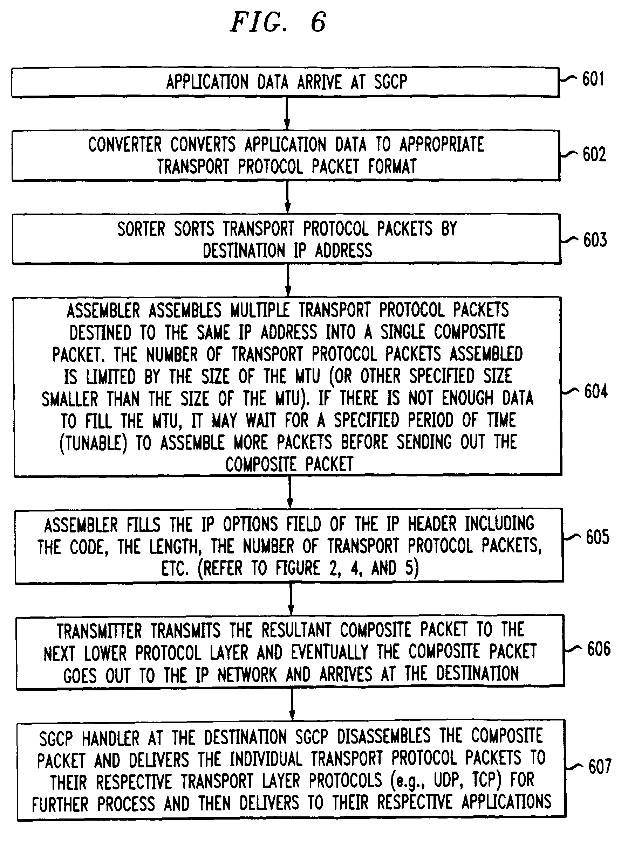

In operation, as shown in flow diagram form in Figure 6, a plurality of application data arrives at the SGCP 100 at step 601. The SGCP typically handles a plurality of application data transmissions, such as voice communications from a plurality of subscriber terminal devices 111-112. The application data transmissions can be voice communications, or data communications, such as credit card transactions, or multimedia communications. These application data are received by receivers 102 that terminate the communication lines 121,122 and sent to the converters 103 of the SGCP 100. At step 602, the converter element 103 handles necessary conversion from the received data streams to appropriate coding and transport protocol packets, such as TCP or UDP. At step 603, the sorter element 105 of the SGCP 100 sorts the generated transport protocol packets by destination IP address and stores these transport protocol packets in a set of output queues 107-1 to 107-n for incorporation into a composite packet. Each of the queues 107-1 to 107-n stores transport protocol packets that are destined for the same destination IP address. The assembler 104 of the SGCP 100 at step 604 assembles multiple transport protocol packets, which are stored in a selected queue and destined for the same destination IP address, into a single composite packet. The number of transport protocol packets that are assembled into the composite packet is limited (as an upper bound) by the size of the MTU -or is limited to some other specified size that is smaller than the size of the MTU. If there is not enough data to fill the MTU, the assembler 104 may wait for a specified period of time to assemble more packets before sending out the IP packet. At step 605, the assembler fills the IP Options Field of the IP Header, including the Code, Length, and number of transport protocol packets. At step 606, the transmitter 108 of the SGCP 100 transmits the resultant packet to the next lower protocol layer in the SGCP 100 and eventually the resultant packet is transmitted through the IP network 106 to the destination SGCP 101 in well known fashion. The SGCP handler 109 of the SGCP 101 at step 607 dissembles the received composite packet into the individual packets, delivers the individual transport protocol packets to their respective transport layer protocols (UDP, TCP), which are then processed and routed to their respective applications that are served by the destination SGCP 101. The SGCP 100 functions to receive application data from multiple user terminal devices, or multiple applications executing on a single user terminal device, or multiple applications executing on multiple user terminal devices, and to process and convert them into transport protocol packets, then to aggregate them into a single packet of the underlying protocol. In this manner, customer communication applications can utilize many small packets with minimal cost to the network performance, thereby freeing application developers from the need to maintain larger packet sizes to maintain data transmission efficiency. Implementation of this optimization is simple and can be carried out at a variety of protocol layers of the IP network, and aggregating subscriber packets at a particular layer of the IP does not affect the operation of any other layer. The aggregated subscriber packets must have the same origination and destination addresses to avoid the need to disassemble the packets in the IP network and route the packets contained therein. Once the subscriber packets are collected and assembled into the composite packets, only the destination SGCP needs to interpret the aggregation, as the intermediate routers pass on the IP packets normally.

This system for generating composite packets for IP networks results in the following benefits:
1. Faster response time for real time applications.
2. Reduced network resource utilization.
3. Real time application developers need not be concerned with packet size with regard to data transfer efficiency.
4. Reduction in processing time by intermediate routers, since fewer packets need to be processed.
5. Greater resiliency to packet loss, since the loss of a packet containing a small amount of data from multiple sources is less disruptive than the loss of a packet containing data form a single source.

### Preferred Embodiment

Figure 2 illustrates the implementation of an IP header with the IP Options field indicating the multiple UDP option for a packet used in the SGCP 100 and Figure 3 illustrates the implementation of an IP packet used in the SGCP 100 that carries multiple UDP packets.

The SGCP 100 provides an enhancement in the IP protocol layer to carry multiple UDP packets in a single IP packet. The existing IP header format is used and a new IP option is added using the IP Options field in the IP header to indicate that multiple UDP packets are carried in the IP packet. The new IP option is interpreted only by the destination SGCP and the intermediate routers do not process the option. The IP Options field is specified in the IP header as shown in Figure 2, where the IP Options comprises three fields: Code (201), Length (202), and Number of UDPs (203). The Code field 201 of bits (0-7) is itself subdivided into three subfields: Copy, Option Class, and Option Number. The Copy flag is located in bit position 0 of the Code field and controls how routers treat options during fragmentation of the packet. When the Copy bit is set to a value of 1, it specifies that the option should be copied into all fragments of the packet. When the Copy bit is set to a value of 0, it specifies that the option is only copied into the first fragment of the packet. Since the Multiple UDP Option is only interpreted by the destination SGCP, the Copy Flag bit is set to 0. The remaining bits of the Code field consist of the Option Class (bits 1-2) and Option Number (bits 3-7), which collectively define a unique option number. This option number is selected to be a new option that indicates to the destination SGCP that the received packet is a composite packet containing a plurality of UDP packets from different sources. The Length field 202 (bits 8-15) of the IP Options indicates the length of the option and is set to a value of 3 and the Number of UDPs field 203 (bits 16-24) is set to the number of UDPs that are carried in the payload portion of this packet.

Figure 3 illustrates the implementation of an IP packet which carries multiple UDPs. The IP software executing on the source machine processes as many UDPs with the same destination address as possible into the single packet. Each UDP can be of variable length, but each UDP is padded with zero octets at the end to always end on a 32-bit boundary. The padding octets if used are counted in computing the value of the IP Length field, but not in calculating the value of the UDP length field.

### Alternate Embodiments

Figure 4 illustrates the implementation of the IP Options field in the IP header used in the SGCP that carries multiple TCPs are encapsulated in an IP packet. This feature uses another IP option, termed the "multiple TCP option" which is similar to the multiple UDP option described above. The IP Options field for the multiple TCP option is illustrated in Figure 4. The first three fields in the IP options field are similar to the multiple UDP option. This Multiple TCP IP Option is specified in the IP Options filed of the IP header as shown in Figure 2, where the Code bits (0-7) (field 401) are subdivided into three subfields: Copy, Option Class, and Option Number. The Copy flag located in bit position 0 controls how routers treat options during fragmentation of the packet. When the Copy bit is set to a value of 1, it specifies that the option should be copied into all fragments of the packet. When the Copy bit is set to a value of 0, it specifies that the option is only copied into the first fragment of the packet. Since the Multiple TCP Option is only interpreted by the destination SGCP, the Copy Flag bit is set to 0. The remaining bits of the Code field 401 consist of the Option Class (bits 1-2) and Option Number (bits 3-7), which collectively define a unique option number.

This option number is selected to be a new option that indicates to the destination SGCP that the received packet is a composite packet containing a plurality of TCP packets from different sources. The Length field (bits 8-15) (field 402) of the IP Option indicates the length of the option and is set to a value equal to the total length of fields 401-403 plus fields 42-4M, and the Number of TCPs field (bits 16-24) (field 403) is set to the number of TCP packets that are carried in the payload portion of this packet. In addition, the length of TCP packets (fields 42-4M) must be included in the header to allow the destination SGCP to disassemble the IP packet.

Figure 5 illustrates the implementation of a typical header used in the SGCP that carries multiple TCPs and UDPs in a single packet. Another alternative is the encapsulation of multiple TCPs and UDPs in a single packet. As noted above, a new IP option can be added to indicate the encapsulation of multiple TCPs and UDPs. The IP options field is illustrated in Figure 5. The IP Options field is specified in the IP header as shown in Figure 2, where the Code bits (0-7) (field 501) are subdivided into three subfields: Copy, Option Class, and Option Number, where the Code bits (0-7) are subdivided into three subfields: Copy, Option Class, and Option Number. The Copy flag located in bit position 0 controls how routers treat options during fragmentation of the packet. When the Copy bit is set to a value of 1, it specifies that the option should be copied into all fragments of the packet. When the Copy bit is set to a value of 0, it specifies that the option is only copied into the first fragment of the packet. Since the Multiple UDP & TCP Option is only interpreted by the destination SGCP, the Copy Flag bit is set to 0. The remaining bits of the Code field consist of the Option Class (bits 1-2) and Option Number (bits 3-7), which collectively define a unique option number. This option number is selected to be a new option that indicates to the destination SGCP that the received packet is a composite packet containing a plurality of UDP and TCP packets from different sources. The Length field (bits 8-15) (field 502) of the IP Option indicates the length of the IP Option and is set to a value equal to the total length of fields 501-504 plus fields 52-5N, and the Number of UDPs field (bits 16-23) (field 503) and the Number of TCPs field (bits 24-31) (field 504) are set to the number of UDPs and TCPs, respectively, that are carried in the payload portion of this packet. In addition, length of each TCP packets must be included in the header to allow the destination SGCP to disassemble the IP packet, since the TCP header does not include a length field. Thus, a plurality of TCP length definitions 52, 5N are specified in the header of the packet. To support encapsulation of multiple TCPs and UDPs, a new protocol value must be assigned for this new format and used in the "Protocol" field of the IP header. Alternatively, the value in the "Protocol" field can be ignored when the IP options field indicates a mixed TCP/UDP encapsulation.

### Summary

The SGCP aggregates packets from multiple sources into a single packet of the underlying protocol in order to match the MTU. The higher protocol layer packets aggregated into the composite packet must have the same origination and destination addresses. Once composite packets are sent, only the destination SGCPs need to interpret the aggregations, as the intermediate routers pass on the composite packets normally.

## Claims

1. An apparatus for generating composite packets for transmission over an IP network, comprising:
means for receiving data from a plurality of applications;
means for processing said application data and converting into transport protocol packets;
means for generating a composite packet comprising a header and a payload for transmission over said IP network;
means for assembling a plurality of said transport protocol packets into said payload, which have a common destination for said transport protocol packets;
means for writing data into said header indicative of contents of said payload;
means for transmitting said composite packet to said destination SGCP over said IP network; and
means for SGCP handling said composite packet at said destination SGCP.

2. The apparatus of claim 1 wherein said means for generating composite packet comprises:
means for sorting said transport protocol packets as a function of a designated destination of said transport protocol packets; and
means for storing said sorted transport protocol packets in a plurality of queues, one of said plurality of queues being allocated to store sorted said transport protocol packets destined for one of said designated destinations.

3. The apparatus of claim 1 wherein said means for assembling payload comprises:
means for allocating a buffer to accumulate said sorted transport protocol packets destined for one of said designated destinations; and
means for writing at least a portion of said transport protocol packets stored in one of said plurality of queues into said allocated buffer of said payload.

4. The apparatus of claim 1 wherein said means for assembling payload further comprises:
means for limiting the size of the said composite packet; and
means for awaiting up to a specified time to accumulate data.

5. The apparatus of claim 1 wherein said means for writing data into said header comprises:
means for generating data indicative of an options field value representative of said payload comprising a composite packet.

6. The apparatus of claim 1 wherein said means for writing data into said header further comprises:
means for generating data indicative of the number of transport protocol packets contained in the said payload of said composite packet.

7. The apparatus of claim 1 wherein said means for writing data into said header further comprises:
means for generating data indicative of the length of each of said transport protocol packets contained in said payload of said composite packet.

8. The apparatus of claim 1 wherein said means SGCP handling comprises:
means for processing said header of said composite packet;
means for disassembling said composite packet at said destination SGCP;
means for delivering individual transport protocol packets to their respective transport layer;
means for processing said transport protocol packets; and
means for delivering to their respective applications.

9. A method for generating composite packets for transmission over an IP network, comprising the steps of:
receiving data from a plurality of applications;
processing said application data and converting into transport protocol packets;
generating composite packet comprising a header and a payload for transmission over said IP network;
assembling plurality of said transport protocol packets into said payload, which have a common destination for said transport protocol packets;
writing data into said header indicative of contents of said payload;
transmitting said composite packet to said destination SGCP over said IP network; and
SGCP handling said composite packet at said destination SGCP.

10. The method of claim 9 wherein said step of generating composite packet comprises:
sorting said transport protocol packets as a function of a designated destination of said transport protocol packets; and
storing said sorted transport protocol packets in a plurality of queues, one of said plurality of queues being allocated to store sorted transport protocol packets destined for one of said designated destinations.

11. The method of claim 9 wherein said step of assembling payload comprises:
allocating a buffer to accumulate said sorted transport protocol packets destined for one of said designated destinations; and
writing at least a portion of said transport protocol packets stored in one of said plurality of queues into said allocated buffer of said payload.

12. The method of claim 9 wherein said means for assembling payload further comprises:
limiting the size of the said composite packet; and
awaiting up to a specified time to accumulate data.

13. The method of claim 9 wherein said step of writing data into said header comprises:
generating data indicative of an option field value representative of said payload comprising a composite packet.

14. The method of claim 9 wherein said step of writing data into said header further comprises:
generating data indicative of the number of transport protocol packets contained in said payload of said composite packet.

15. The method of claim 9 wherein said step of writing data into said header further comprises:
generating data indicative of the length of each of said transport protocol
packets contained in said payload of said composite packet.

16. The method of claim 9 wherein said step of SGCP handling comprises:
processing said header of said composite packet;
disassembling said composite packet at said destination SGCP;
delivering individual transport protocol packets to their respective transport layer;
processing said transport protocol packets; and
delivering to their respective applications.

17. An apparatus for generating composite packets for transmission over an IP network, comprising:
receiver means for receiving data from a plurality of applications;
converter means for converting said application data into transport protocol packets;
packet sorting means sorting said transport protocol packets as a function of a designated destination of said transport protocol packets;
queuing means for storing said sorted transport protocol packets in a plurality of queues, one of said plurality of queues being allocated to store sorted transport protocol packets destined for one of said designated destinations;
packet generating means for producing a packet comprising a header and a payload for transmission over said IP network;
payload assembling means for assembling plurality of said transport protocol packets into said payload, which have a common destination for said transport protocol packets;
header writing means for writing data into said header indicative of contents of said payload, including:
option designation means for generating data indicative of an option field value representative of said payload comprising a composite packet; and
SGCP handling means for processing header of said composite packet, disassembling said composite packet, delivering individual transport protocol packets to their respective transport layer protocols for further processing, and eventually to their respective applications.

18. The apparatus of claim 17 wherein said means for assembling payload comprises:
buffer allocation means for allocating a buffer to accumulate said sorted transport protocol packets destined for one of said plurality of destinations; and
data transfer means for writing at least a portion of said transport protocol packets stored in one of said plurality of queues into said allocated buffer of said payload.
